# EUROPEAN PATENT APPLICATION

(11) **EP 2 200 189 A1**
(43) Date of publication of application: **23.06.2010**
(21) Application number: 09169413.3
(22) Date of filing: 03.09.2009
(51) Int. Cl.: H04B 7/185, H04L 27/18, H04L 27/34

(54) **Satellite broadcasting system and signal receiving method thereof**

(30) Priority: 22.12.2008 KR 20080131598
(71) Applicant: Electronics and Telecommunications Research Institute, Daejeon 305-700 (KR)
(72) Inventor: Ryu, Joon-Gyu, 302-230, Daejeon (KR); Chang, Dae-Ig, 302-280, Daejeon (KR); Lee, Ho-Jin, 305-390, Daejeon (KR)
(74) Representative: Betten & Resch

(57) **Abstract**

Provided is a satellite broadcasting terminals. The satellite broadcasting terminal includes: a first antenna receiving a radio signal of a first band or a second band; a second antenna receiving a radio signal of a third band; a first stream demodulating unit demodulating a first stream signal received through the first band; a second stream demodulating unit demodulating a second stream signal received through the second band; a playing unit playing the demodulated first or second stream signal; and a gap filler receiving unit selectively providing the first stream signal to the first stream demodulating unit in response to a radio signal intensity of the third band, the first stream signal being received through the third band.

## Description

### CROSS-REFERENCE TO RELATED APPLICATIONS

This patent application claims priority of Korean Patent Application No. 10-2008-0131598, filed on December 22, 2008, the entire contents of which are hereby incorporated by reference.

### BACKGROUND OF THE INVENTION

The present invention disclosed herein reflates to a satellite broadcasting system, and more particularly, to a hierarchical satellite broadcasting system, i.e., a futuristic satellite broadcasting system, and a signal receiving method thereof capable of improving reception performance in a shadow area.

Generally, a satellite broadcasting system such as digital multimedia broadcasting (DMB) transmits a broadcasting signal to the ground through an artificial satellite such as a broadcasting satellite or a communication satellite. A terminal receives audio and video multimedia broadcasting signals transmitted from a broadcasting center at the ground through the medium of the artificial satellite. The received multimedia broadcasting signal is demodulated and decoded in the terminal such that images or voices can be realized. In a case of a satellite broadcasting receiving device that a subscriber owns, broadcasting channels, which are allocated based on the types of specialized broadcast programs such as movie, music, and educational broadcasting programs, are selectively chosen in order to provide a desirable broadcasting program.

On the other hand, there exists a shadow area at the ground where it is difficult to receive a broadcasting signal because of buildings, structures, and terrains because of directional characteristics of a typical broadcasting satellite running at a geostationary orbit in the sky. In a case of satellite broadcasting through the medium of a typical broadcasting satellite, broadcasting reception is possible only under the circumstance where line of sight (LOS) is obtained. Recently, some satellite broadcastings such as satellite DMB uses a gap filler technology in order to receive satellite broadcasting under a Non-LOS circumstance, but a broadcasting signal receiving method is not under consideration in a typical satellite broadcasting system supporting a broadband.

Therefore, techniques for receiving satellite broadcasting seamlessly even under satellite broadcasting environments including tunnels and mountains are urgently needed for a hierarchical satellite broadcasting transmission system, i.e., a futuristic satellite broadcasting system,

### SUMMARY OF THE INVENTION

The present invention provides a device and a method for providing a communication service seamlessly to a mobile terminal even under a shadow area environment through a hierarchical satellite broadcasting system, i.e., a futuristic satellite broadcasting system.

Embodiments of the present invention provide satellite broadcasting terminals including: a first antenna receiving a radio signal of a first band or a second band; a second antenna receiving a radio signal of a third band; a first stream demodulating unit demodulating a first stream signal received through the first band; a second stream demodulating unit demodulating a second stream signal received through the second band; a playing unit playing the demodulated first or second stream signal; and a gap filler receiving unit selectively providing the first stream signal to the first stream demodulating unit in response to a radio signal intensity of the third band, the first stream signal being received through the third band.

In some embodiments, the gap filler receiving unit includes: a first receiving module converting the first stream signal, which is received through the second antenna, into a baseband signal and delivering the converted baseband signal to the first stream demodulating unit; a signal intensity detecting element detecting the radio signal intensity of the third band received through the second antenna; and a switch controlling element delivering a switch control signal to the first stream demodulating unit according to an intensity of the radio signal, the switch control signal selecting a path of the first stream signal.

In other embodiments, the first stream demodulating unit includes: a second receiving module converting the first stream signal to a baseband signal, the first stream signal being received through the first antenna; and a switch allowing selectively one of the first receiving module and the second receiving module to receive the first stream signal in response to the switch control signal.

In still other embodiments, the first stream demodulating unit includes: a first demodulating module demodulating the first stream signal of the baseband into a digital signal, the first stream signal being supplied through the switch; a first decoding module decoding an output of the first demodulating module; and a first mode and stream counter adaptation module restoring a deleted null-packet and an MPEG2-TS packet header in data decoded through the first decoding module in order to constitute an original MPEG2-TS stream.

In even other embodiments, the second stream demodulating unit includes: a third receiving module converting the second stream signal into a baseband signal, the second stream signal being received from the first antenna; a second demodulating module demodulating the first stream signal from the third receiving module into a digital signal; a second decoding module decoding an output of the second demodulating module; and a second mode and counter adaptation module restoring a deleted null-packet and an MPEG2-TS packet header in data decoded through the second decoding module in order to constitute an original MPEG2-TS stream.

In yet other embodiments, the first band is a Ku-band and the second band is a Ka-band.

In further embodiments, the third band is an industrial, scientific, and medical (ISM)-band , wherein a gap filler receives and frequency-converts the first stream signal transmitted through the first band and retransmits the frequency-converted first stream signal through the ISM-band.

In still further embodiments, the first stream signal has a higher priority than the second stream signal.

In even further embodiments, the playing unit selectively plays one of an SD video signal through the first stream signal and an HD video signal through the combined first and second stream signals.

In other embodiments of the present invention, broadcasting signal receiving methods of a satellite broadcasting system include: measuring an intensity of a radio signal transmitted from a gap filler; and receiving a broadcasting signal by selectively linking with one of the gap filler and a broadcasting satellite in response to the intensity of the radio signal. The satellite broadcasting system transmits broadcasting signals of a plurality of hierarchical layers through respectively different bands.

In some embodiments, the gap filler is linked when the intensity of the radio signal is higher than a reference reception intensity and the broadcasting satellite is linked when the intensity of the radio signal is identical to or lower than the reference reception intensity.

In other embodiments, a first stream signal of a high priority is transmitted through the gap filler.

In still other embodiments, when the broadcasting satellite is linked, the first stream signal and a second stream signal having a lower priority than the first stream signal are received through the respectively different bands.

In even other embodiments, the gap filler frequency-converts the first stream signal received from the broadcasting satellite and transmits the frequency-converted first stream signal through an ISM-band.

In yet other embodiments, the broadcasting satellite transmits the first stream signal through a Ku-band and transmits the second stream signal through a Ka-band.

### BRIEF DESCRIPTION OF THE FIGURES

The accompanying figures are included to provide a further understanding of the present invention, and are incorporated in and constitute a part of this specification. The drawings illustrate exemplary embodiments of the present invention and, together with the description, serve to explain principles of the present invention. In the figures:

FIG. 1 is a view illustrating a hierarchical satellite broadcasting system according to an embodiment of the present invention;

FIG. 2 is a view illustrating a hierarchical satellite broadcasting system in a shadow area according to an embodiment of the present invention;

FIG. 3 is a block diagram illustrating a structure of a gap filler;

FIG. 4 is a block diagram illustrating a structure of a terminal of FIG. 2 according to an embodiment of the present invention; and

FIG. 5 is a flowchart illustrating a switching operation of the terminal of FIG. 4.

### DETAIL ED DESCRIPTION OF PREFERRED EMBODIMENTS

Preferred embodiments of the present invention will be described below in more detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art.

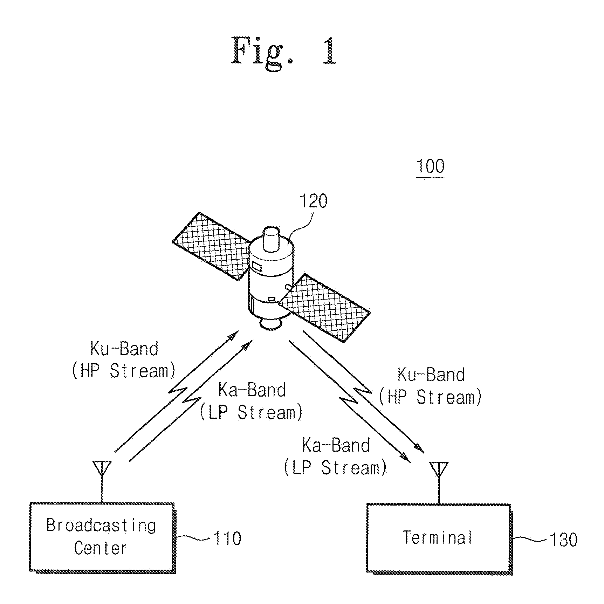

FIG. 1 is a view illustrating a hierarchical satellite broadcasting system 100 according to an embodiment of the present invention. Referring to FIG. 1, the hierarchical satellite broadcasting system 100, i.e., a futuristic satellite broadcasting system, includes a broadcasting satellite 120 relaying between a broadcasting signal sent from a broadcasting center 110 and a terminal 130 receiving the signal transmitted from the broadcasting satellite 120.

The broadcasting center 110 transmits various multimedia contents. According to characteristics or environments of a terminal, diverse techniques for providing hierarchical services have been suggested. For example, because of a sudden change of a network environment, a scalable video coding (SVC) method is adopted as a new video compressing method. According to the SVC method, one image content is encoded into a bit stream having various spatial resolutions, quality, and various frame-rates. Additionally, each terminal is set to receive and restore the transmitted bit stream in order to meet characteristics, abilities, or environments of a terminal. In a system where hierarchical transmission is possible such as DVB-S2 (i.e., a futuristic satellite broadcasting transmission standard), the broadcasting center 110 transmits a high priority (HP) stream through a Ku-band (about 12 GHz to about 18 GHz). Additionally, the broadcasting center 110 transmits a low priority (LP) stream through a Ka-band (about 20 GHz to about 30 GHz).

The broadcasting satellite 120 transmits the HP stream of a Ku-band and the LP stream of a Ka-band, which are transmitted from the broadcasting center 100 at the ground. The broadcasting satellite 120 amplifies the signals received through the Ku/Ka-band by using an embedded broadcasting repeater (not shown) and then retransmits the amplified signals toward a service area at the ground.

The terminal 130 receives the transmitted HP stream signal and LP stream signal through the Ku and Ka-bands from the broadcasting satellite 120. The terminal 130 provides an HD image service using the normally received HP stream signal and LP stream signal. However, if channel conditions become disadvantageous based on changes of weather such as rainfall or environments, a relatively high signal is diminished in the Ka-band. In this case, an SD image service may be provided seamlessly instead of an HD image service by receiving only the HP stream that is transmitted through the Ku-band where signal reduction is relatively less. For example, a decoder in the terminal 130 combines the LP stream signal with the HP stream signal in order to decode image data having high quality and frame-rate. Here, the terminal 130 may be a mobile communication terminal such as a notebook, a personal digital assistant (PDA), a cellular phone, a PCS phone, and a DMB phone or a car having its own terminal.

As mentioned above, concept of a hierarchical satellite broadcasting system capable of providing multi quality service under channel environments is described with reference to the drawing.

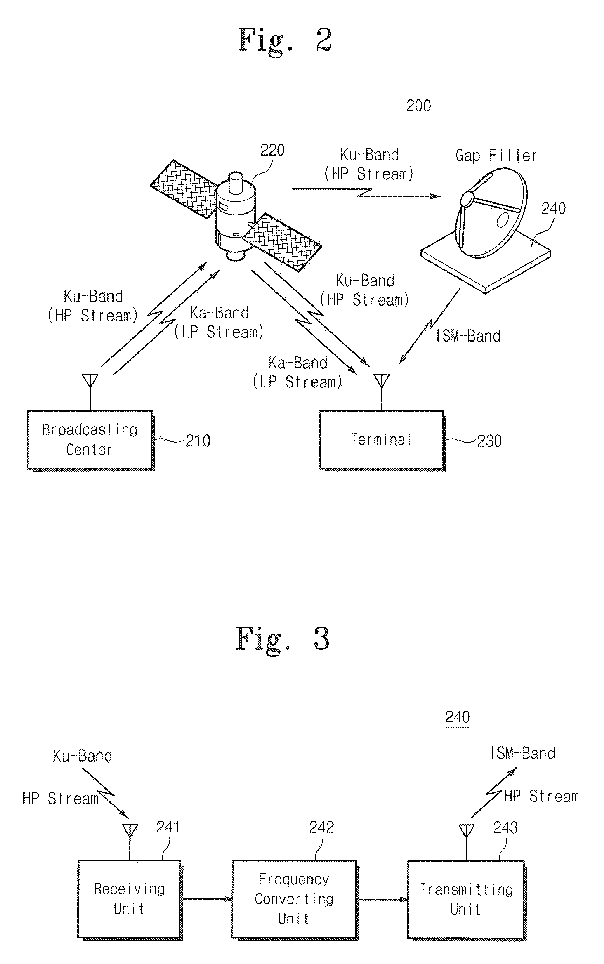

FIG. 2 is a view illustrating a hierarchical satellite broadcasting system 200 in a shadow area according to an embodiment of the present invention. Referring to FIG. 2, the hierarchical satellite broadcasting system 200 includes a broadcasting center 210, a broadcasting satellite 220, a terminal 230, and a gap filler 240. The broadcasting satellite 220 relays a broadcasting signal transmitted from the broadcasting center 210. The gap filler 240 may provide service guarantee about a shadow area.

The broadcasting center 210 transmits various multimedia contents. Because of characteristics or environments of a terminal, techniques for providing hierarchical services have been suggested. For example, due to a sudden change of a network environment, a SVC method is adopted as a new video compressing method. In the SVC method, one image content is encoded into a bit stream having various spatial resolutions, quality, and various frame-rates. In a system where hierarchical transmission is possible such as DVB-S2 (i.e., a futuristic satellite broadcasting transmission standard), the broadcasting center 210 transmits an HP stream through a Ku-band (about 12 GHz to about 18 GHz). Additionally, the broadcasting center 210 transmits an LP stream through a Ka-band (about 20 GHz to about 30 GHz).

The broadcasting satellite 220 receives the HP stream of a Ku-band and the LP stream of Ka-band, which are transmitted from the broadcasting center 2100 at the ground. The broadcasting satellite 220 amplifies the signals received through the Ku and Ka-bands by using an embedded broadcasting repeater (not shown) and then retransmits the amplified signals toward a service area at the ground.

The terminal 230 receives the transmitted HP stream signal and LP stream signal through the Ku and Ka-bands from the broadcasting satellite 220. The terminal 230 provides an HD image service through the normally received HP stream signal and LP stream signal. However, if channel conditions become disadvantageous based on changes of weather such as rainfall or environments, a relatively high signal is diminished in the Ka-band. In this case, an SD image service may be provided seamlessly instead of an HD image service by receiving only the HP stream that is transmitted through the Ku-band where signal reduction is relatively less. The terminal 230 receives the HP stream transmitted from the gap filler 240. Especially, the terminal 230 selects a reception path of the HP stream by detecting a signal intensity transmitted through an industrial, scientific, and medical (ISM)-band (i.e., a transmission band) from the gap filler 240. That is, the terminal 230 receives the HP stream through the ISM-band of the gap filler 240 when a signal intensity received from the gap filler 240, which is installed at a shadow area, is considerable. Accordingly, the SD image service can be continuously provided to the shadow area.

The gap filler 240 converts the HP stream signal of a Ku-band received from the broadcasting satellite 220 into a signal of an ISM-band and then transmits the converted signal to the terminal 230. Thus, the subscriber terminal 230 in a shadow area can receive the converted signal. Here, the gap fillers 240 are distributed over each shadow area where it is difficult to directly receive a digital satellite broadcasting signal from the broadcasting satellite 220. Also, the gap filler 240 provides a signal relaying function that allows the subscriber terminal 230 in each controlled shadow area to normally receive and play a satellite broadcasting signal. Additionally, the ISM-band is a frequency band that is allocated to small output wireless devices that does not requires special permission. For example, a 2.4 GHz band is used for various communications such as public wireless LAN service, Bluetooth, radio-frequency identification (RFID), and a phone without a digital code.

In summary, the hierarchical satellite broadcasting system 200 guarantees the reception of the HP stream in a shadow area and thus provides an SD image service to a subscriber terminal seamlessly.

FIG. 3 is a block diagram illustrating a structure of the gap filler 240. Referring to FIG. 3, the gap filler 240 converts the HP stream transmitted from the broadcasting satellite 220 through a Ku-band into a frequency of the ISM-band, and then retransmits the frequency.

A receiving unit 241 in the gap filler 240 is configured to receive the HP stream signal transmitted through the Ku-band. The receiving unit 241 receives the HP stream signal transmitted from the broadcasting satellite 220 of FIG. 2 through a receiving antenna, and removes its signal noise.

A frequency converting unit 242 demodulates the filtered and amplified reception signal into an intermediate frequency and a baseband frequency. The HP stream signal converted into the baseband signal is modulated into a carrier wave of the ISM-band in the frequency converting unit 242.

A transmitting unit 243 performs power amplification on the band modulated HP stream signal using a means such as a high power amplifier (HPA), and transmits the amplified signal to a transmitting antenna. Therefore, the HP stream signal is transmitted through the ISM-band.

Here, the frequency converting unit 242 may further include means for functions such as correcting errors, decoding, deinterleaving, and descrambling. Although the structure of the gap filler 240 is simply described above, but this is just one exemplary configuration. That is, structures or functions of the gap filler 240 are not limited to the drawing.

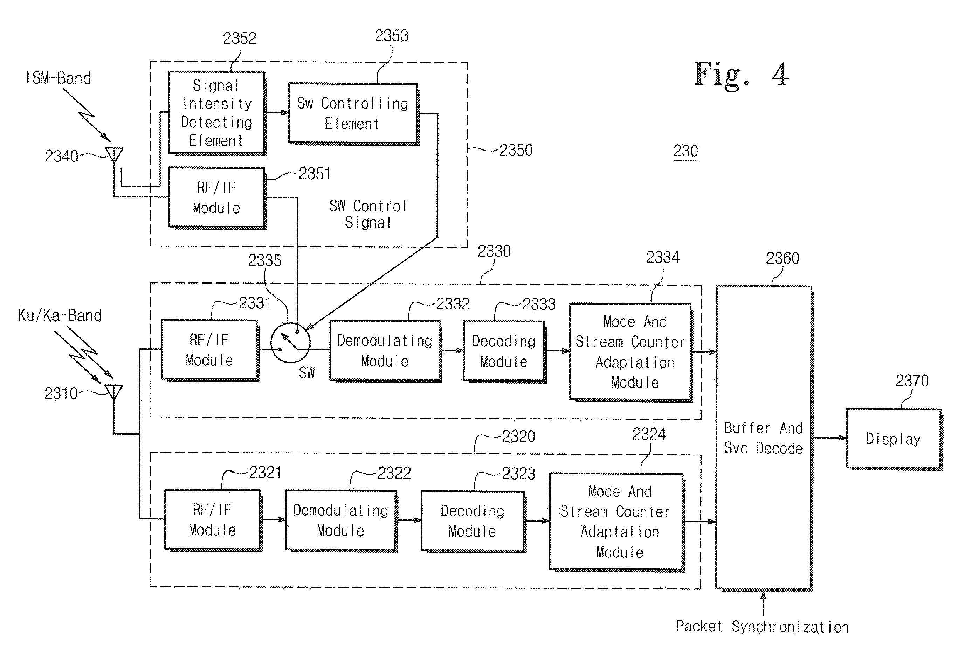

FIG. 4 is a block diagram illustrating a structure of the terminal 230 of FIG. 2 according to an embodiment of the present invention. Referring to FIG. 4, the terminal 230 of a hierarchical satellite broadcasting system includes a first antenna 2310, an LP stream demodulating unit 2320, and a HP stream demodulating unit 2330. The first antenna 2310 receives the HP stream signal and the LP stream signal of the Ku and Ka-bands. The LP stream demodulating unit 2320 demodulates and decodes the LP stream signal transmitted through the Ka-band. The HP stream demodulating unit 2330 demodulates and decodes the HP stream signal transmitted through the Ku-band. Additionally, the terminal 230 includes a second antenna 2340, a gap filler receiving unit 2350, a buffer and SVC decoder 2360, and a display 2370. The second antenna 2350 and the gap filler receiving unit 2350 receive the HP stream signal transmitted through the ISM-band from the gap filler 240 of FIG. 2.

The first antenna 2310 is an antenna that tracks and receives Ku-band and Ka-band radio waves. The second antenna 2340 is an ISM-band antenna that receives the HP stream signal transmitted from the gap filler 240.

The LP stream signal delivered through the Ka-band is delivered to the LP stream demodulating unit 2320. The LP stream demodulating unit 2320 includes a RF/IF module 2321, a demodulating module 2332, a decoding module, and a mode and stream counter adaptation module 2324. The RF/IF module demodulates a signal of the received RF frequency into an intermediate frequency and a low frequency. The demodulating module 2332 demodulates the LP stream signal, which is converted into the intermediate frequency, into a frequency that is easy for signal processing, and then converts it into the digital data. The decoding module 2323 decodes the LP stream signal. Also, the decoding module 2323 processes the LP stream signal according to a method, which is applied to the terminal 230, and delivers the processed signal into the mode and stream counter adaptation module 2324. The mode and stream counter adaptation module 2324 receives data outputted from the decoding module 2323 and restores a deleted null-packet and MPFG2-TS packet header to convert them into an original MPEG2-TS stream. The converted MPEG2-TS stream is transmitted into the buffer and SVC decoder 2360, and is used for providing an HD image signal service.

The HP stream signal delivered through the Ku-band is delivered into the HP stream demodulating unit 2330. The HP stream demodulating unit 2330 includes a RF/IF module 2331 for demodulating the signal of the received RF frequency into an intermediate and frequency and low frequency. The HP stream signal delivered through a switch 2335 is demodulated into a low frequency that is easy for signal processing, and then is converted into digital data. A decoding module 2333 decodes the HP stream signal. The decoding module 2333 processes the HP stream signal according to a method applied to the terminal 230 and then delivers it to the mode and stream counter adaptation module 2334. The mode and stream counter adaptation module 2334 receives data outputted from the decoding module 2333 and restores deleted null-packet and MPEG-TS packet header to convert them into an original MPEG2-TS stream. The converted MPEG2-TS stream is transmitted into the buffer and SVC decoder 2360 and is used when an HD image signal service is provided.

The first antenna 2310 or the second antenna 2340 receives the HP stream signal. In a shadow area where a gap filler signal is excellent, the HP stream signal is received through the second antenna 2340. In an area where a gap filler signal is weak, the HP stream signal is received through the Ku-band of the first antenna 2310. For these operations, the gap filler receiving unit 2350 includes an RF/IF module 2351, a signal intensity detecting element 2352, and a switch controlling element 2353. The signal intensity detecting element 2352 detects an intensity of the ISM-band signal received by the second antenna 2340 of the gap filler receiving unit 2350. The switch controlling element 2353 generates a switch control signal for controlling a position of a switch 2335 according to an intensity of a signal detected by the signal intensity detecting element 2352. The RF/IF module 2351 receives the HP stream signal transmitted through the ISM-band and demodulates it into a baseband signal. If the terminal 230 is placed in a shadow area, the signal intensity detecting element 2352 of the gap filler receiving unit 2350 detects a situation where an intensity of the ISM-band signal received through the second antenna is increased more than a reference reception intensity. Based on the detection result, the switch controlling element 2353 outputs a switch control signal SW for controlling the switch 2335.

As a result, the terminal 230 of the hierarchical satellite broadcasting system receives the HP stream signal transmitted through the ISM-band from the gap filler 240 in a shadow area. Thus, an SD image signal service can be provided to the terminal 230. Moreover, when all of the HP stream signal and the LP stream signal of the Ka and Ku-bands are received, the terminal 230 can provides the HD image service to the display 2370.

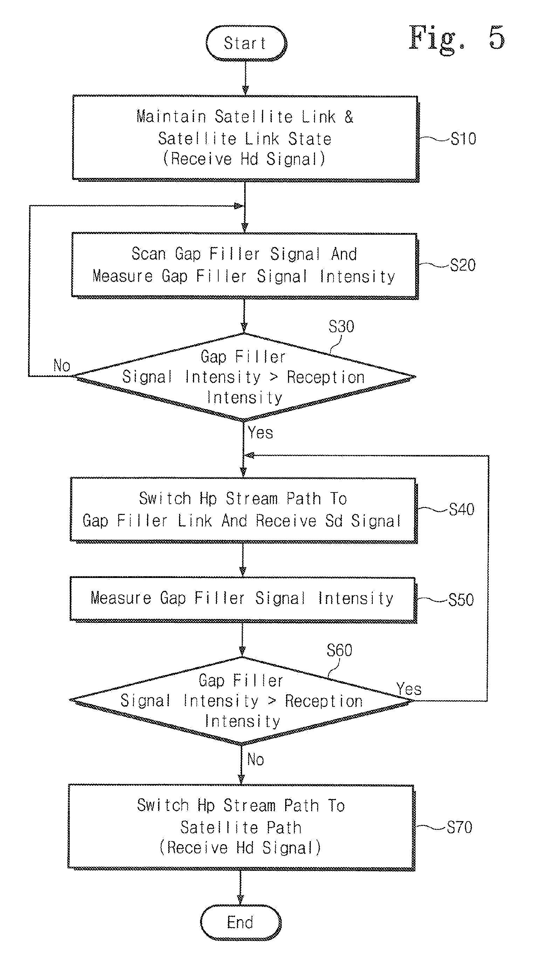

FIG. 5 is a flowchart illustrating a switching operation of the terminal of FIG. 4. FIG. 5 illustrates an operation of a terminal when a reception channel of the HP stream signal is changed in response to the entering of a shadow area in order to provide an SD image signal service seamlessly.

A link operation starts in response to a reset or power-on operation of the terminal 230. First, the terminal 230 tracks Ku and Ka-bands and links with a channel of the broadcasting satellite 220. In operation S10, the HP stream and LP stream signals are received through the Ku and Ka-bands of the broadcasting satellite 220 to receive an HD signal seamlessly. Next, in order to detect whether the terminal 230 enters into a shadow area or not, a gap filler signal is scanned and an intensity of the gap filler signal is measured. In operation S20, the signal intensity detecting element 2352 of FIG. 4 detects the intensity of the gap filler signal. If the detection result of the signal intensity is greater than the reference reception sensitivity, it means that the terminal 230 enters into the shadow area. Accordingly, it proceeds to operation S40 for transmitting an HP stream through the gap filler 240. However, if the detection result of the signal intensity is less than or identical to the reference reception sensitivity, it means that the terminal 340 does not enter into the shadow area. Accordingly, the HP stream signal is received through the Ku-band, and it returns to operation S20 for continuously scanning a gap filler signal and detecting an intensity of the gap filler.

If it is detected that the terminal 340 enters into the shadow area, a path of the HP stream is switched into a link of the gap filler 240. That is, the switch 2335 of FIG. 4 is switched to receive the HP stream from the gap filler 240. As a result, it means that an SD signal can be continuously received through the link of the gap filler 240 even when the terminal 340 enters into the shadow area. The SD image signal service needs to be changed into the HD image signal service once the terminal 340 is out of the shadow area. Therefore, it proceeds to operation S50 for detecting whether the terminal 340 is out of the shadow area or not. The signal intensity detecting element 2352 of the terminal 230 measures a signal intensity delivered through the ISM-band. If a signal intensity of the gap filler 240 is greater than the predetermined reception sensitivity, it means that the terminal 230 is still positioned in the shadow area. Therefore, it proceeds to operation S40 for maintaining the link of the gap filler 240. However, if a signal intensity of the gap filler 240 is less than or identical to the predetermined reception sensitivity, it means that the terminal 230 is out of the shadow area. Therefore, it proceeds to operation S70 for linking a path of the HP stream with the broadcasting satellite 220. Once being linked with the broadcasting satellite 220, all of the HP stream and LP stream signals are received through the Ka and Ku-bands, the terminal 230 can provide an HD image service.

According to the channel link method of the present invention, a terminal detects whether it enters into a shadow area or not and then adaptively changes a transmission channel of an HP stream. Therefore, an SD image signal service can be seamlessly provided at least.

In the satellite broadcasting terminal and the broadcasting signal transmitting method according to the embodiment of the present invention, broadcasting services can be provided to subscribers seamlessly even under a shadow area environment.

The above-disclosed subject matter is to be considered illustrative, and not restrictive, and the appended claims are intended to cover all such modifications, enhancements, and other embodiments, which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

## Claims

1. A satellite broadcasting terminal comprising:
a first antenna receiving a radio signal of a first band or a second band;
a second antenna receiving a radio signal of a third band;
a first stream demodulating unit demodulating a first stream signal received through the first band;
a second stream demodulating unit demodulating a second stream signal received through the second band;
a playing unit playing the demodulated first or second stream signal; and
a gap filler receiving unit selectively providing the first stream signal to the first stream demodulating unit in response to a radio signal intensity of the third band, the first stream signal being received through the third band.

2. The satellite broadcasting terminal of claim 1, wherein the gap filler receiving unit comprises:
a first receiving module converting the first stream signal, which is received through the second antenna, into a baseband signal and delivering the converted baseband signal to the first stream demodulating unit;
a signal intensity detecting element detecting the radio signal intensity of the third band received through the second antenna; and
a switch controlling element delivering a switch control signal to the first stream demodulating unit according to an intensity of the radio signal, the switch control signal selecting a path of the first stream signal.

3. The satellite broadcasting terminal of claim 2, wherein the first stream demodulating unit comprises:
a second receiving module converting the first stream signal to a baseband signal, the first stream signal being received through the first antenna; and
a switch allowing selectively one of the first receiving module and the second receiving module to receive the first stream signal in response to the switch control signal.

4. The satellite broadcasting terminal of claim 3, wherein the first stream demodulating unit comprises:
a first demodulating module demodulating the first stream signal of the baseband into a digital signal, the first stream signal being supplied through the switch;
a first decoding module decoding an output of the first demodulating module; and
a first mode and stream counter adaptation module restoring a deleted null-packet and an MPEG2-TS packet header in data decoded through the first decoding module in order to constitute an original MPEG2-TS stream.

5. The satellite broadcasting terminal of claim 4, wherein the second stream demodulating unit comprises:
a third receiving module converting the second stream signal into a baseband signal, the second stream signal being received from the first antenna;
a second demodulating module demodulating the first stream signal from the third receiving module into a digital signal;
a second decoding module decoding an output of the second demodulating module; and
a second mode and counter adaptation module restoring a deleted null-packet and an MPEG2-TS packet header in data decoded through the second decoding module in order to constitute an original MPEG2-TS stream.

6. The satellite broadcasting terminal of one of claims 1 to 5, wherein the first band is a Ku-band and the second band is a Ka-band.

7. The satellite broadcasting terminal of one of claims 1 to 6, wherein the third band is an industrial, scientific, and medical (ISM)-band, wherein a gap filler receives and frequency-converts the first stream signal transmitted through the first band and retransmits the frequency-converted first stream signal through the ISM-band.

8. The satellite broadcasting terminal of one of claims 1 to 7, wherein the first stream signal has a higher priority than the second stream signal.

9. The satellite broadcasting terminal of one of claims 1 to 8, wherein the playing unit selectively plays one of an SD video signal through the first stream signal and an HD video signal through the combined first and second stream signals.

10. A broadcasting signal receiving method of a satellite broadcasting system, the method comprising:
measuring an intensity of a radio signal transmitted from a gap filler; and
receiving a broadcasting signal by selectively linking with one of the gap filler and a broadcasting satellite in response to the intensity of the radio signal,
wherein the satellite broadcasting system transmits broadcasting signals of a plurality of hierarchical layers through respectively different bands.

11. The method of claim 10, wherein the gap filler is linked when the intensity of the radio signal is higher than a reference reception intensity and the broadcasting satellite is linked when the intensity of the radio signal is identical to or lower than the reference reception intensity.

12. The method of claim 11, wherein a first stream signal of a high priority is transmitted through the gap filler.

13. The method of claim 12, wherein when the broadcasting satellite is linked, the first stream signal and a second stream signal having a lower priority than the first stream signal are received through the respectively different bands.

14. The method of claim 11, 12 or 13, wherein the gap filler frequency-converts the first stream signal received from the broadcasting satellite and transmits the frequency-converted first stream signal through an ISM-band.

15. The method of one of claims 11 to 14, wherein the broadcasting satellite transmits the first stream signal through a Ku-band and transmits the second stream signal through a Ka-band.
